# EUROPEAN PATENT APPLICATION

(11) **EP 4 142 371 A1**
(43) Date of publication of application: **01.03.2023**
(21) Application number: 21792286.3
(22) Date of filing: 16.04.2021
(51) Int. Cl.: H04W 40/22

(54) **METHOD FOR DETERMINING SIDELINK RELAY NODE, SIDELINK RELAY NODE AND TERMINAL**

(30) Priority: 20.04.2020 CN 202010313463
(71) Applicant: Vivo Mobile Communication Co., Ltd., Dongguan, Guangdong 523863 (CN)
(72) Inventor: KIMBA DIT ADAMOU, Boubacar, Dongguan, Guangdong 523863 (CN)
(74) Representative: Petraz, Gilberto Luigi
(86) International application number: PCT/CN2021/087737
(87) International publication number: WO 2021/213266

(57) **Abstract**

The present invention discloses a method for determining a sidelink SL relay node, an SL relay node, and a terminal, and relates to the field of communication technologies. The method is applied to a first SL relay node, and includes: obtaining SL connection request information of a first terminal; and sending SL connection forwarding information in a case that the first SL relay node meets a first preset condition, where the SL connection forwarding information includes the SL connection request information.

## Description

### CROSS-REFERENCE TO RELATED APPLICATION

This application claims the priority of Chinese Patent Application No. 202010313463.9 filed in China on April 20, 2020, the entire content of which is hereby incorporated by reference.

### TECHNICAL FIELD

The present invention relates to the field of communication technologies, and in particular, to a method for determining a sidelink (Sidelink, SL) relay node, an SL relay node, and a terminal.

### BACKGROUND

Currently, in a terminal-to-terminal (UE-to-UE) sidelink-relay (SL-relay) node network, if there is no effective SL-relay, the following problems may occur:
a remote (remote) UE selects an inappropriate SL-relay, so that requirements of the remote UE cannot be ensured;
power (power) of the remote UE or the SL-relay is consumed; and
the unnecessary SL-relay is selected, resulting in a large quantity of hops of the SL-relay.

### SUMMARY

The present invention provides a method for determining a sidelink SL relay node, an SL relay node, and a terminal, to resolve the problem that an appropriate SL relay cannot be effectively selected.

To resolve the above technical problem, the present invention is implemented as follows.

According to a first aspect, an embodiment of the present invention provides a method for determining a sidelink SL relay node, applied to a first SL relay node, the method including:
obtaining SL connection request information of a first terminal; and
sending SL connection forwarding information in a case that the first SL relay node meets a first preset condition, where the SL connection forwarding information includes the SL connection request information.

According to a second aspect, an embodiment of the present invention further provides a method for determining a sidelink SL relay node, applied to a second terminal, the method including:
receiving SL connection forwarding information sent by a fourth SL relay node, where the SL connection forwarding information includes SL connection request information of a first terminal.

According to a third aspect, an embodiment of the present invention further provides an SL relay node, the SL relay node being a first SL relay node, and including:
a first obtaining module, configured to obtain SL connection request information of a first terminal; and
a first processing module, configured to send SL connection forwarding information in a case that the first SL relay node meets a first preset condition, where the SL connection forwarding information includes the SL connection request information.

According to a fourth aspect, an embodiment of the present invention further provides an SL relay node, the SL relay node being a first SL relay node, and including: a memory, a processor, and a computer program stored in the memory and executable on the processor, when the computer program is executed by the processor, the steps of the method for determining a sidelink SL relay node applied to a first SL relay node described above are implemented.

According to a fifth aspect, an embodiment of the present invention further provides a terminal, the terminal being a second terminal, and including:
a first receiving module, configured to receive SL connection forwarding information sent by a fourth SL relay node, where the SL connection forwarding information includes SL connection request information of a first terminal.

According to a sixth aspect, an embodiment of the present invention further provides a terminal, the terminal being a second terminal, and including: a memory, a processor, and a computer program stored in the memory and executable on the processor, when the computer program is executed by the processor, the steps of the method for determining a sidelink SL relay node applied to a second terminal described above are implemented.

According to a seventh aspect, an embodiment of the present invention further provides a computer-readable storage medium, storing a computer program, when the computer program is executed by a processor, implementing the steps of the method for determining a sidelink SL relay node described above.

According to an eighth aspect, an embodiment of the present invention further provides a chip, including: a processor and a communication interface, where the communication interface is coupled to the processor, and the processor is configured to run a program or instruction, to implement the method according to the first aspect or implement the method according to the second aspect.

According to a ninth aspect, an embodiment of the present invention further provides a computer program product, stored in a readable storage medium, when the computer program product is executed by at least one processor, the method according to the first aspect or implementing the method according to the second aspect is implemented.

According to a tenth aspect, an embodiment of the present invention further provides a communication device, configured to perform the method according to the first aspect or perform the method according to the second aspect.

Beneficial effects of the present invention are:
In the above solutions, SL connection request information of a first terminal is obtained, and SL connection forwarding information including the SL connection request information is sent in a case that a first SL relay node meets a first preset condition, which can effectively select an appropriate SL-relay.

### BRIEF DESCRIPTION OF THE DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings according to such accompanying drawings without creative efforts.
FIG. 1 is a first schematic flowchart of a method for determining an SL relay node according to an embodiment of the present invention;
FIG. 2 is a schematic diagram of communication between a first terminal and a second terminal according to an embodiment of the present invention;
FIG. 3 is a second schematic flowchart of a method for determining an SL relay node according to an embodiment of the present invention;
FIG. 4 is a schematic diagram of modules of a first SL relay node according to an embodiment of the present invention;
FIG. 5 is a structural block diagram of a first SL relay node according to an embodiment of the present invention;
FIG. 6 is a schematic diagram of modules of a second terminal according to an embodiment of the present invention; and
FIG. 7 is a structural block diagram of a second terminal according to an embodiment of the present invention.

### DETAILED DESCRIPTION

The following describes in detail exemplary embodiments of the present invention with reference to the accompanying drawings. Although the accompanying drawings show the exemplary embodiments of the present invention, it should be understood that the present invention may be implemented in various manners and is not limited by the embodiments described herein. Rather, these embodiments are provided, so that the present invention is more thoroughly understood and the scope of the present invention is completely conveyed to a person skilled in the art.

The specification and claims of this application, and terms "first" and "second" are used to distinguish similar objects, but are unnecessarily used to describe a specific sequence or order. It should be understood that the data termed in such a way are interchangeable in proper circumstances, so that the embodiments of this application described herein can be implemented in other orders than the order illustrated or described herein. Further, the terms "include", "comprise", "have", and any variations thereof, are intended to cover non-exclusive inclusion. For example, a process, method, system, product, or device that includes or comprises a series of steps or units is not necessarily limited to the expressly enumerated steps or units, but may include other steps or units that are not expressly enumerated or that are inherent to the process, method, product, or device.

Before the embodiments of the present invention are described, some concepts to be used in the following description are explained first.

### Introduction of SL:

A long term evolution (Long Term Evolution, LTE) system starts to support a sidelink Sidelink (or translated to a secondary link, a side link, or the like) from a 12th release version, and is configured to perform direct data transmission between UEs without going through a network device.

The design of an LTE Sidelink is suitable for specific public safety affairs (such as emergency communication in disaster sites such as fire or earthquake), or vehicle-to-everything (vehicle to everything, V2X) communication. The vehicle-to-everything communication includes various services, such as: basic safety communication, advanced (autonomous) driving, formation of a platoon, and sensor expansion. Because the LTE Sidelink only supports broadcast communication, the LTE Sidelink is mainly used for basic safety communication, and other advanced V2X services with requirements of strict quality of service (Quality of Service, QoS) in terms of time delays and reliability will be supported through an NR Sidelink. A new radio (New Radio, NR) system of a 5th-generation (5th-Generation, 5G) mobile communication technology can be used in a working frequency band above 6 GHz that is not supported by the LTE, and supports a larger working bandwidth. However, the NR system of the current version only supports an interface between a base station and a terminal, and does not yet support a Sidelink interface for direct communication between terminals.

Specifically, embodiments of the present invention provide a method for determining a sidelink SL relay node, an SL relay node, and a terminal, which can effectively select an appropriate SL-relay.

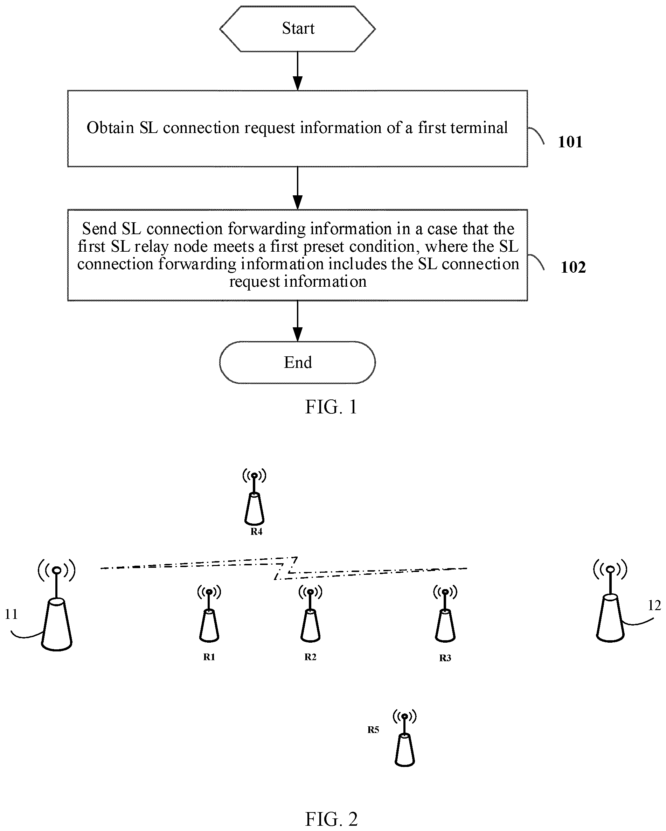

As shown in FIG. 1, an embodiment of the present invention provides a method for determining a sidelink SL relay node, applied to a first SL relay node. The method includes the following steps.

Step 101. Obtain SL connection request information of a first terminal.

Specifically, the first SL relay node may directly obtain the SL connection request information sent by the first terminal; or, the first SL relay node may indirectly obtain the SL connection request information sent by the first terminal.

FIG. 2 is a block diagram of a communication system to which the embodiments of the present invention are applicable. The communication system includes a first terminal 11, a second terminal 12, and a plurality of relay nodes relay (such as, five relays R1 to R5) between the first terminal 11 and the second terminal 12. The first terminal 11 initiates SL connection request information, namely, SL communication connection communication request information, to the second terminal 12, but the second terminal 12 may not be within a signal transmission range of the first terminal 11 at one hop. Therefore, the SL connection request information needs to be forwarded between the first terminal 11 and the second terminal 12 through an SL-relay. The SL connection request information initiated by the first terminal 11 to the second terminal 12 will carry information requiring assistance of the SL-relay.

It should be noted that, the first terminal 11 and the second terminal 12 may also be referred to as terminal devices or user equipments (User Equipment, UE). The first terminal 11 and the second terminal 12 may be, for example, terminal side devices such as mobile phones, tablet personal computers (Tablet Personal Computer), laptop computers (Laptop Computer), personal digital assistants (Personal Digital Assistant, PDA), mobile Internet devices (Mobile Internet Device, MID), wearable apparatus (Wearable Device), or in-vehicle devices. It should be noted that, specific types of the first terminal 11 and the second terminal 12 are not limited in the embodiments of the present invention.

Optionally, the SL connection request information includes, but is not limited to, at least one of the following information.

A11: Location information of the first terminal.

Specifically, the location information of the first terminal includes, but is not limited to, at least one of x, y, and z coordinate information or other positioning information (such as, positioning information of the first terminal relative to a base station) of the first terminal.

A12: Identification information of the first terminal, such as: an identifier (Identifier, ID) of the first terminal.

A13: Service-related information of the first terminal.

Specifically, the service-related information includes, but is not limited to, at least one of a service type and a QoS requirement.

A14: Identification information of a second terminal to which the first terminal requests the SL connection.

Specifically, the second terminal may learn, through the identification information of the second terminal, a request that the first terminal requires the SL connection, for example, the identification information of the second terminal may be an ID of the second terminal.

A15: First indication information indicating that the SL connection request information needs to be forwarded.

Specifically, the SL connection request information carries the first indication information indicating that an SL relay node needs to forward the SL connection request information, and the first indication information is used for indicating the SL relay node to forward the SL connection request information.

Step 102. Send SL connection forwarding information in a case that the first SL relay node meets a first preset condition, where the SL connection forwarding information includes the SL connection request information.

Before step 102, after the first SL relay node obtains the SL connection request information of the first terminal, the first SL relay node determines whether the first SL relay node meets the first preset condition, that is, the first SL relay node determines whether the first SL relay node is used as an SL-relay for forwarding the SL connection request information between the first terminal and the second terminal. In a case that the first SL relay node meets the first preset condition, the SL connection forwarding information including the SL connection request information may be sent.

In the above embodiment of the present invention, SL connection request information of a first terminal is obtained, and SL connection forwarding information including the SL connection request information is sent in a case that a first SL relay node meets a first preset condition, which can effectively select an appropriate SL-relay.

Optionally, step 101 may specifically include:
obtaining the SL connection request information sent by the first terminal; or
obtaining the SL connection request information sent by the first terminal that is forwarded by a second SL relay node.

Specifically, if step 101 is specifically that the first SL relay node obtains the SL connection request information sent by the first terminal, the first SL relay node is used as a first-hop SL-relay to directly receive the SL connection request information sent by the first terminal. If step 101 is specifically that the first SL relay node obtains the SL connection request information sent by the first terminal that is forwarded by the second SL relay node, the second SL relay node is used as a first-hop SL-relay to directly receive the SL connection request information sent by the first terminal, and the second SL relay node forwards the SL connection request information to the first SL relay node.

It should be noted that, the second SL relay node may include one or more relays. In a case that the second SL relay node includes one relay, the second SL relay node is used as a first-hop SL relay node, and the first SL relay node is used as a second-hop SL relay node. In a case that the second SL relay node includes two relays, the two relays included in the second SL relay node are respectively used as a first-hop SL relay node and a second-hop SL relay node, and the first SL relay node is used as a third-hop SL relay node. By analogy, a situation in which the second SL relay node includes three or more relays is not described in detail herein.

Optionally, the first preset condition includes, but is not limited to, at least one of the following.

B11: A forwarding function of a service request of the first terminal is met.

Specifically, the first SL relay node needs to meet the forwarding function of the service request of the first terminal. If the first SL relay node meets the forwarding function of the service request of the first terminal, the first SL relay node may be used as the SL-relay for forwarding the SL connection request information between the first terminal and the second terminal. If the first SL relay node does not meet the forwarding function of the service request of the first terminal, the first SL relay node is inappropriately used as the SL-relay for forwarding the SL connection request information between the first terminal and the second terminal.

B 12: A distance between the first SL relay node and the first terminal is within a first preset range.

Specifically, in a case that the first SL relay node is used as the first-hop SL relay node, the distance between the first SL relay node and the first terminal needs to be within the first preset range. If the distance between the first SL relay node and the first terminal is within the first preset range, the first SL relay node may be used as the SL-relay for forwarding the SL connection request information between the first terminal and the second terminal. If the distance between the first SL relay node and the first terminal is outside the first preset range, the first SL relay node is inappropriately used as the SL-relay for forwarding the SL connection request information between the first terminal and the second terminal.

For example, in a case that a distance (distance) between the first SL relay node and a first terminal UE1 is represented as dist-to-UE1, if X1 ≤ dist-to-UE1 ≤ Y1, the first SL relay node may be used as the SL-relay for forwarding the SL connection request information between the first terminal and the second terminal; and if dist-to-UE1 < X1 or dist-to-UE1 > Y1, the first SL relay node is inappropriately used as the SL-relay for forwarding the SL connection request information between the first terminal and the second terminal, where X1 and Y1 are preset distance values.

B13: A distance between the first SL relay node and the second SL relay node that previously forwards the SL connection request information sent by the first terminal is within a second preset range.

Specifically, in a case that SL connection request information received by the first SL relay node is the SL connection request information forwarded by the second SL relay node, that is, the first SL relay node is used as another-hop SL relay node after the first-hop SL relay node, the distance between the first SL relay node and the second SL relay node that previously forwards the SL connection request information sent by the first terminal needs to be within the second preset range. If the distance between the first SL relay node and the second SL relay node is within the second preset range, the first SL relay node may be used as the SL-relay for forwarding the SL connection request information between the first terminal and the second terminal. If the distance between the first SL relay node and the second SL relay node is outside the second preset range, the first SL relay node is inappropriately used as the SL-relay for forwarding the SL connection request information between the first terminal and the second terminal.

It should be noted that, the first preset range and the second preset range may be a same range, or may be different ranges, which are not specifically limited herein.

For example, in a case that the second SL relay node is R1 and the distance between the first SL relay node and the second SL relay node is represented as dist-to-R1, if X2 ≤ dist-to-R1 ≤ Y2, the first SL relay node may be used as the SL-relay for forwarding the SL connection request information between the first terminal and the second terminal; and if dist-to-R1 < X2 or dist-to-R1 > Y2, the first SL relay node is inappropriately used as the SL-relay for forwarding the SL connection request information between the first terminal and the second terminal, where X2 and Y2 are preset distance values.

B14: A distance between the first SL relay node and the second terminal to which the first terminal requests the SL connection is within a third preset range.

Specifically, regardless of whether the first SL relay node is used as the first-hop SL relay node or used as another-hop SL relay node after the first-hop SL relay node, if the distance between the first SL relay node and the second terminal is within the third preset range, the first SL relay node may be used as the SL-relay for forwarding the SL connection request information between the first terminal and the second terminal. If the distance between the first SL relay node and the second terminal is outside the third preset range, the first SL relay node is inappropriately used as the SL-relay for forwarding the SL connection request information between the first terminal and the second terminal.

It should be noted that, the first preset range, the second preset range, and the third preset range may be a same range, or may be different ranges, which are not specifically limited herein.

For example, in a case that a distance between the first SL relay node and a second terminal UE2 is represented as dist-to-UE2, if X3 ≤ dist-to-UE2 ≤ Y3, the first SL relay node may be used as the SL-relay for forwarding the SL connection request information between the first terminal and the second terminal; and if dist-to-UE2 < X3 or dist-to-UE2 > Y3, the first SL relay node is inappropriately used as the SL-relay for forwarding the SL connection request information between the first terminal and the second terminal, where X3 and Y3 are preset distance values.

B15: A received signal strength (Received Signal Strength, RSS) of the first terminal is greater than or equal to a first preset value.

Specifically, in a case that SL connection request information obtained by the first SL relay node is the SL connection request information sent by the first terminal, if the first SL relay node detects that the RRS of the first terminal is greater than or equal to the first preset value, the first SL relay node may be used as the SL-relay for forwarding the SL connection request information between the first terminal and the second terminal. If the first SL relay node detects that the RRS of the first terminal is less than the first preset value, the first SL relay node is inappropriately used as the SL-relay for forwarding the SL connection request information between the first terminal detected that the second terminal.

For example, in a case that the RRS of the first terminal detected by the first SL relay node is represented as RSS-to-UE1, and the first preset value is a preset signal threshold value S1, if RSS-to-UE1 ≥ S1, the first SL relay node may be used as the SL-relay for forwarding the SL connection request information between the first terminal and the second terminal. If RSS-to-UE1 < S1, the first SL relay node is inappropriately used as the SL-relay for forwarding the SL connection request information between the first terminal and the second terminal.

B16: An RRS of the second SL relay node that previously forwards the SL connection request information sent by the first terminal is greater than or equal to a second preset value.

Specifically, in a case that SL connection request information obtained by the first SL relay node is the SL connection request information sent by the first terminal that is forwarded by the second SL relay node, if the first SL relay node detects that the RRS of the second SL relay node is greater than or equal to the second preset value, the first SL relay node may be used as the SL-relay for forwarding the SL connection request information between the first terminal and the second terminal. If the first SL relay node detects that the RRS of the second SL relay node is less than the second preset value, the first SL relay node is inappropriately used as the SL-relay for forwarding the SL connection request information between the first terminal detected that the second terminal.

For example, in a case that the second SL relay node is R1, the RRS of the second SL relay node detected by the first SL relay node is represented as RSS-to-R1, and the second preset value is a preset signal threshold value S2, if RSS-to-R1 ≥ S2, the first SL relay node may be used as the SL-relay for forwarding the SL connection request information between the first terminal and the second terminal. If RSS-to-R1 < S2, the first SL relay node is inappropriately used as the SL-relay for forwarding the SL connection request information between the first terminal and the second terminal.

Optionally, in a case that step 101 is specifically the obtaining the SL connection request information sent by the first terminal, the SL connection forwarding information further includes, but is not limited to, at least one of the following information.

C11: Location information of the first SL relay node.

Specifically, in a case that SL connection request information received by the first SL relay node is the SL connection request information sent by the first terminal that is directly received by the first SL relay node, if the first SL relay node meets the first preset condition, the first SL relay node may forward the SL connection request information, and send the location information of the first SL relay node.

It should be noted that, the location information of the first SL relay node includes, but is not limited to, at least one of x, y, and z coordinate information or other positioning information (such as, positioning information of the first SL relay node relative to a base station) of the first SL relay node.

C12: An RRS of the first terminal detected by the first SL relay node.

Specifically, in a case that SL connection request information received by the first SL relay node is the SL connection request information sent by the first terminal that is directly received by the first SL relay node, if the first SL relay node meets the first preset condition, the first SL relay node may forward the SL connection request information, and send the RRS of the first terminal detected by the first SL relay node.

Optionally, in a case that step 101 is specifically the obtaining the SL connection request information sent by the first terminal that is forwarded by a second SL relay node, the SL connection forwarding information further includes, but is not limited to, at least one of the following information.

D 11: Identification information of the first SL relay node.

Specifically, in a case that SL connection request information received by the first SL relay node is the SL connection request information forwarded by the second SL relay node, if the first SL relay node meets the first preset condition, the first SL relay node may forward the SL connection request information, and send the identification information of the first SL relay node. The identification information of the first SL relay node may be an ID of the first SL relay node, or the like.

D12: Identification information of the second SL relay node.

Specifically, in a case that SL connection request information received by the first SL relay node is the SL connection request information forwarded by the second SL relay node, if the first SL relay node meets the first preset condition, the first SL relay node may forward the SL connection request information, and send the received identification information of the second SL relay node. The identification information of the second SL relay node may be an ID of the second SL relay node, or the like.

Optionally, after step 102, the method further includes:
obtaining first response information fed back by a second terminal to which the first terminal requests the SL connection after receiving the SL connection forwarding information; and
sending the first response information.

Specifically, after the second terminal receives the SL connection forwarding information, the second terminal feeds back the first response information according to the SL connection forwarding information, and the first SL relay node obtains the first response information of the second terminal, and forwards the first response information to the first terminal.

Optionally, the obtaining first response information fed back by a second terminal after receiving the SL connection forwarding information may specifically include:
obtaining the first response information sent by the second terminal; or
obtaining the first response information sent by the second terminal that is forwarded by a third SL relay node.

Specifically, if the obtained first response information is specifically the first response information sent by the second terminal that is obtained by the first SL relay node, the first SL relay node is used as a last-hop SL-relay to directly receive the first response information sent by the second terminal. If the obtained first response information is specifically the first response information sent by the second terminal that is forwarded by the third SL relay node that is obtained by the first SL relay node, the third SL relay node is used as a last-hop SL-relay to directly receive the first response information sent by the second terminal, and the third SL relay node forwards the first response information to the first SL relay node.

It should be noted that, the third SL relay node may include one or more relays. In a case that the third SL relay node includes one relay, the third SL relay node is used as a last-hop SL relay node, and the first SL relay node is used as a second-to-last-hop SL relay node. In a case that the third SL relay node includes two relays, the two relays included in the third SL relay node are respectively used as a last-hop SL relay node and a second-to-last-hop SL relay node, and the first SL relay node is used as a third-to-last-hop SL relay node. By analogy, a situation in which the third SL relay node includes three or more relays is not described in detail herein.

In summary, in the above embodiment of the present invention, SL connection request information of a first terminal is obtained, and SL connection forwarding information including the SL connection request information is sent in a case that a first SL relay node meets a first preset condition, which can effectively select an appropriate SL-relay.

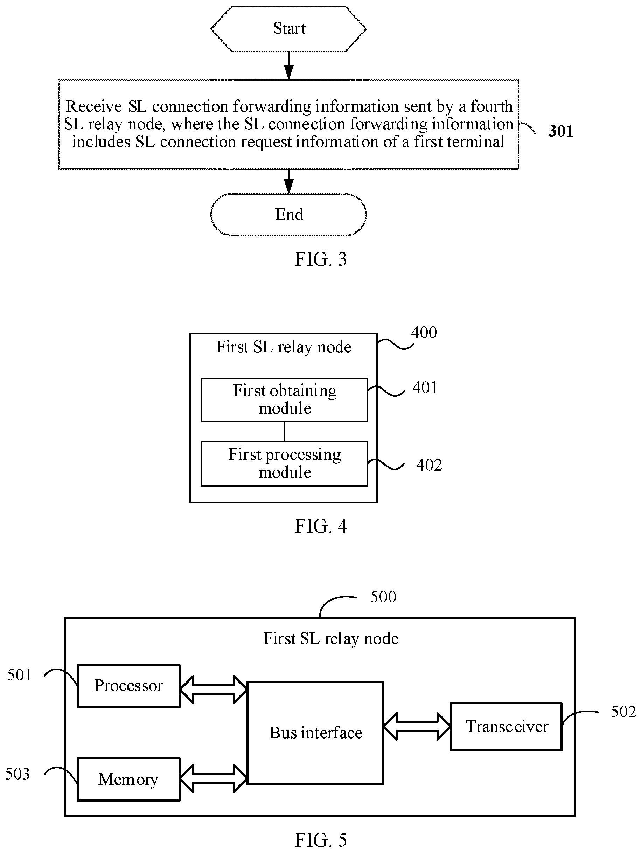

As shown in FIG. 3, an embodiment of the present invention further provides a method for determining a sidelink SL relay node, applied to a second terminal. The method includes the following steps.

Step 301. Receive SL connection forwarding information sent by a fourth SL relay node, where the SL connection forwarding information includes SL connection request information of a first terminal.

In the above step 301, the second terminal receives the SL connection forwarding information forwarded by the fourth SL relay node (namely, a last-hop SL relay node).

In the above embodiment of the present invention, SL connection forwarding information including SL connection request information of a first terminal that is sent by a fourth SL relay node meeting a first preset condition is received, which can effectively select an appropriate SL-relay.

Optionally, the SL connection request information includes, but is not limited to, at least one of the following information.

A11: Location information of the first terminal.

Specifically, the location information of the first terminal includes, but is not limited to, at least one of x, y, and z coordinate information or other positioning information (such as, positioning information of the first terminal relative to a base station) of the first terminal.

A12: Identification information of the first terminal.

Specifically, the second terminal may learn, through the identification information of the first terminal, a request that the first terminal requires the SL connection, such as: an identifier (Identifier, ID) of the first terminal.

A13: Service-related information of the first terminal.

Specifically, the service-related information includes, but is not limited to, at least one of a service type and a QoS requirement.

A14: Identification information of a second terminal to which the first terminal requests the SL connection.

Specifically, the second terminal may learn, through the identification information of the second terminal, a request that the first terminal requires the SL connection, for example, the identification information of the second terminal may be an ID of the second terminal.

A15: First indication information indicating that the SL connection request information needs to be forwarded.

Specifically, the SL connection request information carries the first indication information indicating that an SL relay node needs to forward the SL connection request information, and the first indication information is used for indicating the SL relay node to forward the SL connection request information.

Optionally, after step 103, the method further includes:
determining a target SL path according to the SL connection forwarding information; and
sending first response information through the target SL path.

Specifically, after the SL connection forwarding information is received, the second terminal may determine, according to the SL connection forwarding information, the target SL path for sending the first response information, and send the first response information through the target SL path.

Optionally, the SL connection forwarding information further includes, but is not limited to, at least one of the following information.

E11: Location information of the fourth SL relay node.

Specifically, if SL connection request information included in the SL connection forwarding information forwarded by the fourth SL relay node is the SL connection request information sent by the first terminal, the SL connection forwarding information received by the second terminal may further include the location information of the fourth SL relay node.

It should be noted that, the location information of the fourth SL relay node includes, but is not limited to, at least one of x, y, and z coordinate information or other positioning information (such as, positioning information of the fourth SL relay node relative to a base station) of the fourth SL relay node.

E12: An RRS of the first terminal detected by the fourth SL relay node.

Specifically, if SL connection request information included in the SL connection forwarding information forwarded by the fourth SL relay node is the SL connection request information sent by the first terminal, the SL connection forwarding information received by the second terminal may further include the RSS of the first terminal detected by the fourth SL relay node.

E13: Identification information of the fourth SL relay node.

Specifically, if SL connection request information included in the SL connection forwarding information forwarded by the fourth SL relay node is SL connection request information received by the fourth SL relay node from a fifth SL relay node, the SL connection forwarding information received by the second terminal may further include the identification information of the fourth SL relay node. The identification information of the fourth SL relay node may be an ID of the fourth SL relay node, or the like.

E14: Identification information of a fifth SL relay node which forwards the SL connection request information to the fourth SL relay node.

Specifically, if SL connection request information included in the SL connection forwarding information forwarded by the fourth SL relay node is SL connection request information received by the fourth SL relay node from a fifth SL relay node, the SL connection forwarding information received by the second terminal may further include the identification information of the fifth SL relay node. The identification information of the fifth SL relay node may be an ID of the fifth SL relay node, or the like.

It should be noted that, the fifth SL relay node may include one or more relays. In a case that the fifth SL relay node includes one relay, the fifth SL relay node is used as a first-hop SL relay node, and the fourth SL relay node is used as a second-hop SL relay node. In a case that the fifth SL relay node includes two relays, the two relays included in the fifth SL relay node are respectively used as a first-hop SL relay node and a second-hop SL relay node, and the fourth SL relay node is used as a third-hop SL relay node. By analogy, a situation in which the third SL relay node includes three or more relays is not described in detail herein.

Optionally, in a case that SL connection forwarding information sent by one fourth SL relay node is received and SL connection request information included in the SL connection forwarding information is the SL connection request information obtained by the fourth SL relay node from the first terminal, the target SL path is an SL path on which the fourth SL relay node is located.

In the above embodiment, if the SL connection forwarding information sent by the one fourth SL relay node is received (that is, a last-hop SL relay node only has one SL relay node meeting the first preset condition) and the SL connection request information included in the SL connection forwarding information is the SL connection request information obtained by the fourth SL relay node from the first terminal (that is, the first terminal directly forwards the SL connection request information to the second terminal through the fourth SL relay node), an SL path formed by the second terminal, the fourth SL relay node, and the first terminal is the target SL path.

For example, if the fourth SL relay node is R1, the second terminal sends the first response information to R1, and R1 forwards the first response information to the first terminal.

Optionally, in a case that SL connection forwarding information sent by a plurality of fourth SL relay nodes is received and SL connection request information included in the SL connection forwarding information is the SL connection request information obtained by the fourth SL relay nodes from the first terminal, the target SL path is an SL path on which a target SL relay node in the plurality of fourth SL relay nodes is located.

In the above embodiment, if the SL connection forwarding information sent by the plurality of fourth SL relay nodes is received (that is, a last-hop SL relay node has a plurality of SL relay nodes meeting the first preset condition) and the SL connection request information included in the SL connection forwarding information is the SL connection request information obtained by the fourth SL relay nodes from the first terminal (that is, the first terminal directly forwards the SL connection request information to the second terminal through the fourth SL relay nodes), the path in which the target SL relay node in the plurality of fourth SL relay nodes is located needs to be selected as the target SL path, that is, a path formed by the second terminal, the target SL relay node, and the first terminal is the target SL path.

Optionally, an RRS of the target SL relay node is higher than RRSs of other SL relay nodes in the plurality of fourth SL relay nodes except the target SL relay node; and/or
a distance between the target SL relay node and the second terminal is less than distances between the other SL relay nodes and the second terminal.

Specifically, the second terminal detects RSSs of the fourth SL relay nodes, and the second terminal selects a fourth SL relay node with a highest RSS as the target SL relay node. Alternatively, the second terminal detects distances between the second terminal and the fourth SL relay nodes according to the SL connection forwarding information, and the second terminal selects a fourth SL relay node with a smallest distance to the second terminal as the target SL relay node.

For example, in a case that the second terminal receives SL connection forwarding information sent by two fourth SL relay nodes R1 and R2 and the first terminal forwards the SL connection request information to the second terminal through R1 and R2 respectively, that is, a first SL path is an SL path formed by the second terminal, R1, and the first terminal, and a second SL path is an SL path formed by the second terminal, R2, and the first terminal, if a distance between R1 and the second terminal is less than a distance between R2 and the second terminal, the second terminal selects R1 as the target SL relay node, and the SL path in which R1 is located is the target SL path, that is, the SL path formed by the second terminal, R1, and the first terminal is the target SL path.

Optionally, in a case that the SL connection request information included in the SL connection forwarding information is SL connection request information received by the fourth SL relay node from a fifth SL relay node, the target SL path is an SL path with a smallest quantity of SL relay nodes in a plurality of SL paths formed by different combinations of the fourth SL relay node and the fifth SL relay node.

In the above embodiment, if the SL connection request information included in the SL connection forwarding information is the SL connection request information received by the fourth SL relay node from the fifth SL relay node, the second terminal selects the SL path with the smallest quantity of SL relay nodes in the plurality of SL paths formed by different combinations of the fourth SL relay node and the fifth SL relay node as the target SL path, that is, the second terminal selects an SL path with a smallest quantity of hops as the target SL path.

For example, in a case that the fourth SL relay node is R3, the fifth SL relay node is R1 and R2, the first terminal is UE1, and the second terminal is UE2, if the SL paths combined by the fourth SL relay node and the fifth SL relay node include two SL paths: UE2-R3-R2-R1-UE1 and UE2-R3-R1-UE1, because there are three hops in the SL path UE2-R3-R2-R1-UE1 and there are two hopes in the SL path UE2-R3-R1-UE1 in this case, the second terminal selects UE2-R3-R1-UE1 as the target SL path.

Further, in a case that there are a plurality of SL paths with a smallest quantity of SL relay nodes, the target SL path is an SL path including a target SL relay node in the SL paths with the smallest quantity of SL relay nodes.

In the above embodiment, if the SL connection request information included in the SL connection forwarding information is the SL connection request information received by the fourth SL relay node from the fifth SL relay node, the second terminal selects the SL path with the smallest quantity of SL relay nodes in the plurality of SL paths formed by different combinations of the fourth SL relay node and the fifth SL relay node as the target SL path. In a case that there are the plurality of SL paths with the smallest quantity of SL relay nodes, the second terminal detects RSSs of last-hop SL relay nodes in the SL paths (namely, the SL paths with the smallest quantity of SL relay nodes), and the second terminal selects a last-hop SL relay node with a highest RRS as the target SL relay node, that is, an SL path in which the target SL relay node is the target SL path. Alternatively, the second terminal detects distances between the second terminal and the last-hop SL relay nodes in the SL paths according to the SL connection forwarding information, and the second terminal selects a last-hop SL relay node with a smallest distance to the second terminal as the target SL relay node, that is, an SL path in which the target SL relay node is the target SL path.

For example, in a case that the fourth SL relay node is R3 and R4, the fifth SL relay node is R1 and R2, the first terminal is UE1, and the second terminal is UE2, if the SL paths combined by the fourth SL relay node and the fifth SL relay node include four SL paths: UE2-R3-R2-R1-UE1, UE2-R3-R1-UE1, UE2-R4-R2-UE1, and UE2-R4-R2-R1-UE1, because there are three hops in the SL paths UE2-R3-R2-R1-UE1 and UE2-R4-R2-R1-UE1 and there are two hopes in the SL paths UE2-R3-R1-UE1 and UE2-R4-R1-UE1 in this case, SL paths with a smallest quantity of hops include UE2-R3-R1-UE1 and UE2-R4-R1-UE1. In this case, if a distance between R1 and the second terminal is less than a distance between R2 and the second terminal, the second terminal selects R1 as the target SL relay node, and an SL path in which R1 is located is the target SL path, that is, UE2-R3-R1-UE1 is the target SL path.

In summary, in the above embodiment of the present invention, SL connection forwarding information including SL connection request information of a first terminal that is sent by a fourth SL relay node meeting a first preset condition is received, and a target SL path for sending first response information is determined, which can effectively select an appropriate SL-relay.

As shown in FIG. 4, an embodiment of the present invention provides an SL relay node. The SL relay node is a first SL relay node 400, and includes:
a first obtaining module 401, configured to obtain SL connection request information of a first terminal; and
a first processing module 402, configured to send SL connection forwarding information in a case that the first SL relay node meets a first preset condition, where the SL connection forwarding information includes the SL connection request information.

Optionally, the first obtaining module 401 includes:
a first obtaining unit, configured to obtain the SL connection request information sent by the first terminal; or
a second obtaining unit, configured to obtain the SL connection request information sent by the first terminal that is forwarded by a second SL relay node.

Optionally, the SL connection request information includes at least one of the following information:
location information of the first terminal;
identification information of the first terminal;
service-related information of the first terminal;
identification information of a second terminal to which the first terminal requests the SL connection; and
first indication information indicating that the SL connection request information needs to be forwarded.

Optionally, the first preset condition includes at least one of the following:
a forwarding function of a service request of the first terminal is met;
a distance between the first SL relay node and the first terminal is within a first preset range;
a distance between the first SL relay node and a second SL relay node that previously forwards the SL connection request information sent by the first terminal is within a second preset range;
a distance between the first SL relay node and a second terminal to which the first terminal requests the SL connection is within a third preset range;
a received signal strength RSS of the first terminal is greater than or equal to a first preset value; and
an RRS of a second SL relay node that previously forwards the SL connection request information sent by the first terminal is greater than or equal to a second preset value.

Optionally, in the first obtaining unit, the SL connection forwarding information further includes at least one of the following information:
location information of the first SL relay node; and
an RRS of the first terminal detected by the first SL relay node.

Optionally, in the second obtaining unit, the SL connection forwarding information further includes at least one of the following information:
identification information of the first SL relay node; and
identification information of the second SL relay node.

Optionally, the method further includes:
a second obtaining module, configured to obtain first response information fed back by a second terminal to which the first terminal requests the SL connection after receiving the SL connection forwarding information; and
a first sending module, configured to send the first response information.

Optionally, the second obtaining module includes:
a third obtaining unit, configured to obtain the first response information sent by the second terminal; or
a fourth obtaining unit, configured to obtain the first response information sent by the second terminal that is forwarded by a third SL relay node.

It should be noted that, the SL relay node in this embodiment is an SL relay node corresponding to the method for determining an SL relay node applied to a first SL relay node described above, and all implementations of the above embodiments are applicable to the SL relay node in this embodiment, and can also achieve the same technical effects. To avoid repetition, details are not described herein again.

An embodiment of the present invention further provides an SL relay node, including: a memory, a processor, and a computer program stored in the memory and executable on the processor, when the computer program is executed by the processor, all processes of the embodiments of the method for determining an SL relay node applied to a first SL relay node described above are implemented.

FIG. 5 is a structural diagram of an SL relay node according to an embodiment of the present invention. The SL relay node is a first SL relay node, which can implement details of the method for determining an SL relay node described above, and can achieve the same effects. As shown in FIG. 5, a first SL relay node 500 includes a processor 501, a transceiver 502, a memory 503, and a bus system.

The processor 501 is configured to read a program in the memory 503, to perform the following processes:
obtaining SL connection request information of a first terminal; and
sending SL connection forwarding information in a case that the first SL relay node meets a first preset condition, where the SL connection forwarding information includes the SL connection request information.

In FIG. 5, a bus architecture may include any quantity of interconnected buses and bridges, and specifically connects together circuits that are of one or more processors represented by the processor 501 and of a memory represented by the memory 503. The bus architecture may further connect various other circuits for example, a peripheral device, a voltage stabilizer, and a power management circuit. These are known in the art, and therefore are not further described in this specification. The bus interface provides an interface. The transceiver 502 may be a plurality of components, including a transmitter and a receiver, and providing units for communicating with various other apparatuses on a transmission medium.

Optionally, the processor 501 is specifically configured to:
obtain the SL connection request information sent by the first terminal; or
obtain the SL connection request information sent by the first terminal that is forwarded by a second SL relay node.

Optionally, the SL connection request information includes at least one of the following information:
location information of the first terminal;
identification information of the first terminal;
service-related information of the first terminal;
identification information of a second terminal to which the first terminal requests the SL connection; and
first indication information indicating that the SL connection request information needs to be forwarded.

Optionally, the first preset condition includes at least one of the following:
a forwarding function of a service request of the first terminal is met;
a distance between the first SL relay node and the first terminal is within a first preset range;
a distance between the first SL relay node and a second SL relay node that previously forwards the SL connection request information sent by the first terminal is within a second preset range;
a distance between the first SL relay node and a second terminal to which the first terminal requests the SL connection is within a third preset range;
a received signal strength RSS of the first terminal is greater than or equal to a first preset value; and
an RRS of a second SL relay node that previously forwards the SL connection request information sent by the first terminal is greater than or equal to a second preset value.

Optionally, in a case of obtaining the SL connection request information sent by the first terminal, the SL connection forwarding information further includes at least one of the following information:
location information of the first SL relay node; and
an RRS of the first terminal detected by the first SL relay node.

Optionally, in a case of obtaining the SL connection request information sent by the first terminal that is forwarded by a second SL relay node, the SL connection forwarding information further includes at least one of the following information:
identification information of the first SL relay node; and
identification information of the second SL relay node.

Optionally, the processor 501 is further configured to:
obtain first response information fed back by a second terminal to which the first terminal requests the SL connection after receiving the SL connection forwarding information; and
send the first response information.

Optionally, the processor 501 is specifically configured to:
obtain the first response information sent by the second terminal; and
obtain the first response information sent by the second terminal that is forwarded by a third SL relay node.

An embodiment of the present invention further provides a computer-readable storage medium, storing a computer program, when the computer program is executed by a processor, all processes of the embodiments of the method for determining an SL relay node applied to a first SL relay node described above are implemented, and the same technical effects is achieved. To avoid repetition, details are not described herein again. The computer-readable storage medium is, for example, a read-only memory (Read-Only Memory, ROM), a random access memory (Random Access Memory, RAM), a magnetic disk, or an optical disc.

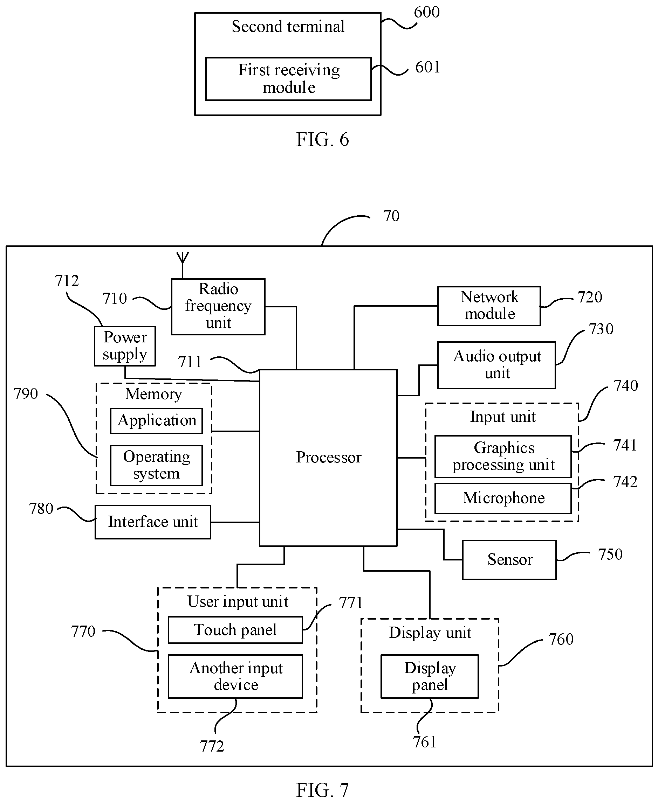

As shown in FIG. 6, an embodiment of the present invention further provides a terminal. The terminal is a second terminal 600, and includes:
a first receiving module 601, configured to receive SL connection forwarding information sent by a fourth SL relay node, where the SL connection forwarding information includes SL connection request information of a first terminal.

Optionally, the SL connection request information includes at least one of the following information:
location information of the first terminal;
identification information of the first terminal;
service-related information of the first terminal;
identification information of a second terminal to which the first terminal requests the SL connection; and
first indication information indicating that the SL connection request information needs to be forwarded.

Optionally, the method further includes:
a first determining module, configured to determine a target SL path according to the SL connection forwarding information; and
a second sending module, configured to send first response information through the target SL path.

Optionally, the SL connection forwarding information further includes at least one of the following information:
location information of the fourth SL relay node;
an RRS of the first terminal detected by the fourth SL relay node;
identification information of the fourth SL relay node; and
identification information of a fifth SL relay node in a case of forwarding the SL connection request information to the fourth SL relay node.

Optionally, in a case that SL connection forwarding information sent by one fourth SL relay node is received and SL connection request information included in the SL connection forwarding information is the SL connection request information obtained by the fourth SL relay node from the first terminal, the target SL path is an SL path on which the fourth SL relay node is located.

Optionally, in a case that SL connection forwarding information sent by a plurality of fourth SL relay nodes is received and SL connection request information included in the SL connection forwarding information is the SL connection request information obtained by the fourth SL relay nodes from the first terminal, the target SL path is an SL path on which a target SL relay node in the plurality of fourth SL relay nodes is located.

Optionally, in a case that the SL connection request information included in the SL connection forwarding information is SL connection request information received by the fourth SL relay node from a fifth SL relay node, the target SL path is an SL path with a smallest quantity of SL relay nodes in a plurality of SL paths formed by different combinations of the fourth SL relay node and the fifth SL relay node.

Optionally, in a case that there are a plurality of SL paths with a smallest quantity of SL relay nodes, the target SL path is an SL path including a target SL relay node in the SL paths with the smallest quantity of SL relay nodes.

Optionally, an RRS of the target SL relay node is higher than RRSs of other SL relay nodes in the plurality of fourth SL relay nodes except the target SL relay node; and/or
a distance between the target SL relay node and the second terminal is less than distances between the other SL relay nodes and the second terminal.

It should be noted that, the terminal in this embodiment is a terminal corresponding to the method for determining an SL relay node applied to a second terminal described above, and all implementations of the above embodiments are applicable to the terminal in this embodiment, and can also achieve the same technical effects. To avoid repetition, details are not described herein again.

FIG. 7 is a schematic diagram of a hardware structure of a terminal according to an embodiment of the present invention. The terminal is a second terminal.

The second terminal 70 includes, but is not limited to, components such as a radio frequency unit 710, a network module 720, an audio output unit 730, an input unit 740, a sensor 750, a display unit 760, a user input unit 770, an interface unit 780, a memory 790, a processor 711, and a power supply 712. A person skilled in the art may understand that the terminal structure shown in FIG. 7 does not constitute a limitation on the terminal, and the terminal may include more or fewer components than shown, or combine some components, or have different component arrangements. In this embodiment of the present invention, the terminal includes, but is not limited to, a mobile phone, a tablet computer, a notebook computer, a palmtop computer, an in-vehicle terminal, a wearable device, a pedometer, and the like.

The processor 710 is configured to receive SL connection forwarding information sent by a fourth SL relay node, where the SL connection forwarding information includes SL connection request information of a first terminal.

It should be understood that, in this embodiment of the present invention, the radio frequency unit 710 may be configured to transmit and receive information or transmit and receive signals during a call. Specifically, the radio frequency unit is configured to receive downlink data from a network-side device and transmit downlink data to the processor 711 for processing. In addition, the radio frequency unit transmits uplink data to the network-side device. Generally, the radio frequency unit 710 includes, but is not limited to, an antenna, at least one amplifier, a transceiver, a coupler, a low noise amplifier, a duplexer, and the like. In addition, the radio frequency unit 710 may further communicate with another device through a wireless communication system and a network.

The terminal may provide, by using the network module 720, wireless broadband Internet access for a user, for example, help the user to receive or send an email, browse a webpage, and access stream media.

The audio output unit 730 may convert audio data received by the radio frequency unit 710 or the network module 720 or stored in the memory 790 into audio signals and output the audio signals as sounds. In addition, the audio output unit 730 may provide an audio output (such as a call signal receiving sound or a message receiving sound) related to a specific function executed by the second terminal 70. The audio output unit 730 includes a speaker, a buzzer, a receiver, and the like

The input unit 740 is configured to receive an audio or video signal. The input unit 740 may include a graphics processing unit (Graphics Processing Unit, GPU) 741 and a microphone 742. The graphics processing unit 741 performs processing on image data of a static picture or a video that is obtained by an image acquisition apparatus (for example, a camera) in a video acquisition mode or an image acquisition mode. The processed image frame may be displayed on the display unit 760. An image frame that has been processed by the graphics processing unit 741 may be stored in the memory 790 (or another storage medium) or sent by using the radio frequency unit 710 or the network module 720. The microphone 742 may receive a sound and can process such a sound into audio data. The processed audio data may be transferred, in a phone talk mode, to a format that may be sent to a mobile communication network side device via the radio frequency unit 710 to output.

The second terminal 70 may further include at least one sensor 750, such as an optical sensor, a motion sensor, and other sensors. Specifically, the optical sensor may include an ambient light sensor and a proximity sensor, where the ambient light sensor may adjust luminance of the display panel 761 according to the luminance of the ambient light, and the proximity sensor may switch off the display panel 761 and/or backlight when the second terminal 70 is moved to the ear. As one type of motion sensor, an accelerometer sensor can detect magnitudes of accelerations in various directions (generally, on three axes), may detect a magnitude and a direction of the gravity when static, and may be applied to recognizing the attitude of the terminal (for example, switching between landscape orientation and portrait orientation, a related game, and magnetometer attitude calibration), a function related to vibration recognition (such as a pedometer and a knock), and the like. The sensor 750 may further include a fingerprint sensor, a pressure sensor, an iris sensor, a molecular sensor, a gyroscope, a barometer, a hygrometer, a thermometer, an infrared sensor, and the like, which are not described herein in detail.

The display unit 760 is configured to display information inputted by the user or information provided for the user. The display unit 760 may include a display panel 761. The display panel 761 may be configured by using a liquid crystal display (Liquid Crystal Display, LCD), an organic light-emitting diode (Organic Light-Emitting Diode, OLED), or the like.

The user input unit 770 may be configured to receive input digit or character information, and generate a keyboard signal input related to the user setting and function control of the terminal. Specifically, the user input unit 770 includes a touch panel 771 and another input device 772. The touch panel 771, also referred to as a touchscreen, may collect a touch operation of a user on or near the touch panel (such as an operation of a user on or near the touch panel 771 by using any suitable object or attachment, such as a finger or a touch pen). The touch panel 771 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and transmits the touch point coordinates to the processor 711. Moreover, the touch controller may receive and execute a command transmitted from the processor 711. In addition, the touch panel 771 may be implemented by using various types, such as a resistive type, a capacitance type, an infrared type, and a surface acoustic wave type. In addition to the touch panel 771, the user input unit 770 may further include the another input device 772. Specifically, the another input device 772 may include, but is not limited to, a physical keyboard, a functional key (for example, a volume control key or a switch key), a track ball, a mouse, and a joystick, and the details will not be described herein again.

Further, the touch panel 771 may cover the display panel 761. After detecting a touch operation on or near the touch panel, the touch panel 771 transfers the touch operation to the processor 711, to determine a type of a touch event. Then, the processor 711 provides a corresponding visual output on the display panel 761 according to the type of the touch event. In FIG. 7, the touch panel 771 and the display panel 761 implement, as two independent parts, input and output functions of the terminal. However, in some embodiments, the touch panel 771 and the display panel 761 may be integrated to implement the input and output functions of the terminal. The details are not limited herein.

The interface unit 780 is an interface for connecting an external apparatus and the second terminal 70. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 780 may be configured to receive an input (such as data information or electric power) from an external apparatus and transmit the received input to one or more elements in the second terminal 70 or may be configured to transmit data between the second terminal 70 and an external apparatus.

The memory 790 may be configured to store a software program and various data. The memory 790 may mainly include a program storage region and a data storage region. The program storage region may store an operating system, an application program required by at least one function (for example, a sound playback function and an image playback function), or the like. The data storage region may store data (for example, audio data and a phone book) created according to use of the mobile phone. In addition, the memory 740 may include a high speed random access memory, and may also include a non-volatile memory, such as at least one magnetic disk storage device, a flash memory, or another volatile solid-state storage device.

The processor 711 is a control center of the terminal, and connects to various parts of the terminal by using various interfaces and lines. By running or executing the software program and/or module stored in the memory 790, and invoking data stored in the memory 790, the processor performs various functions and data processing of the terminal, thereby performing overall monitoring on the terminal. Optionally, the processor 711 may include one or more processing units. Preferably, the processor 711 may integrate an application processor and a modem. The application processor mainly processes an operating system, a user interface, an application program, and the like. The modem mainly processes wireless communication. It may be understood that the foregoing modem may not be integrated into the processor 711.

The second terminal 70 may further include the power supply 712 (such as a battery) for supplying power to the components. Preferably, the power supply 712 may be logically connected to the processor 711 by a power management system, thereby implementing functions such as charging, discharging, and power consumption management by using the power management system.

In addition, the second terminal 70 includes some functional module that are not shown, which are not described herein in detail.

Preferably, an embodiment of the present invention further provides a terminal. The terminal is a second terminal, and includes a processor 711, a memory 790, and a computer program stored in the memory 790 and executable on the processor 711. When the computer program is executed by the processor 711, all processes of the embodiments of the method for determining an SL relay node applied to a second terminal are implemented, and the same technical effects is achieved. To avoid repetition, details are not described herein again.

An embodiment of the present invention further provides a computer-readable storage medium, storing a computer program. When the computer program is executed by a processor, all processes of the embodiments of the method for determining an SL relay node applied to a second terminal are implemented, and the same technical effects is achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of the present invention further provides a chip, including: a processor and a communication interface, where the communication interface is coupled to the processor, and the processor is configured to run a program or instruction, to implement all processes of the embodiments of the method for determining an SL relay node described above, and can achieve the same technical effects. To avoid repetition, details are not described herein again.

It should be understood that, the chip mentioned in this embodiment of the present invention may also be referred to as a system-level chip, a system chip, a chip system, a system on chip, or the like.

An embodiment of the present invention further provides a computer program product, stored in a readable storage medium. When the computer program is executed by at least one processor, all processes of the embodiments of the method for determining an SL relay node described above are implemented, and the same technical effects is achieved. To avoid repetition, details are not described herein again.

An embodiment of the present invention further provides a communication device, where the communication device is configured to perform all processes of the embodiments of the method for determining an SL relay node described above, and can achieve the same technical effects. To avoid repetition, details are not described herein again.

It may be understood that the embodiments described in the present disclosure may be implemented by hardware, software, firmware, middleware, microcode, or a combination thereof. For hardware implementation, a module, a unit, a sub-module, and a sub-unit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in this application, or a combination of the above.

It should be noted that, the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network-side device, or the like) to perform the methods described in the embodiments of the present invention.

The foregoing descriptions are exemplary implementations of the present invention. A person of ordinary skill in the art may make some improvements and modifications without departing from the principle of the present invention and the improvements and modifications shall fall within the protection scope of the present invention.

## Claims

1. A method for determining a sidelink SL relay node, applied to a first SL relay node, the method comprising:
obtaining SL connection request information of a first terminal; and
sending SL connection forwarding information in a case that the first SL relay node meets a first preset condition, wherein the SL connection forwarding information comprises the SL connection request information.

2. The method according to claim 1, wherein the obtaining SL connection request information of a first terminal comprises:
obtaining the SL connection request information sent by the first terminal; or
obtaining the SL connection request information sent by the first terminal that is forwarded by a second SL relay node.

3. The method according to claim 1 or 2, wherein the SL connection request information comprises at least one of following information:
location information of the first terminal;
identification information of the first terminal;
service-related information of the first terminal;
identification information of a second terminal to which the first terminal requests the SL connection; and
first indication information indicating that the SL connection request information needs to be forwarded.

4. The method according to claim 1, wherein the first preset condition comprises at least one of following:
a forwarding function of a service request of the first terminal is met;
a distance between the first SL relay node and the first terminal is within a first preset range;
a distance between the first SL relay node and a second SL relay node that previously forwards the SL connection request information sent by the first terminal is within a second preset range;
a distance between the first SL relay node and a second terminal to which the first terminal requests the SL connection is within a third preset range;
a received signal strength RSS of the first terminal is greater than or equal to a first preset value; and
an RRS of a second SL relay node that previously forwards the SL connection request information sent by the first terminal is greater than or equal to a second preset value.

5. The method according to claim 2, wherein in a case of obtaining the SL connection request information sent by the first terminal, the SL connection forwarding information further comprises at least one of following information:
location information of the first SL relay node; and
an RRS of the first terminal detected by the first SL relay node.

6. The method according to claim 2, wherein in a case of obtaining the SL connection request information sent by the first terminal that is forwarded by a second SL relay node, the SL connection forwarding information further comprises at least one of following information:
identification information of the first SL relay node; and
identification information of the second SL relay node.

7. The method according to claim 1, wherein after the sending SL connection forwarding information, the method further comprises:
obtaining first response information fed back by a second terminal to which the first terminal requests the SL connection after receiving the SL connection forwarding information; and
sending the first response information.

8. The method according to claim 7, wherein the obtaining first response information fed back by a second terminal after receiving the SL connection forwarding information comprises:
obtaining the first response information sent by the second terminal; or
obtaining the first response information sent by the second terminal that is forwarded by a third SL relay node.

9. A method for determining a sidelink SL relay node, applied to a second terminal, the method comprising:
receiving SL connection forwarding information sent by a fourth SL relay node, wherein the SL connection forwarding information comprises SL connection request information of a first terminal.

10. The method according to claim 9, wherein the SL connection request information comprises at least one of following information:
location information of the first terminal;
identification information of the first terminal;
service-related information of the first terminal;
identification information of a second terminal to which the first terminal requests the SL connection; and
first indication information indicating that the SL connection request information needs to be forwarded.

11. The method according to claim 9, wherein after the receiving SL connection forwarding information sent by a fourth SL relay node, the method further comprises:
determining a target SL path according to the SL connection forwarding information; and
sending first response information through the target SL path.

12. The method according to claim 11, wherein the SL connection forwarding information further comprises at least one of following information:
location information of the fourth SL relay node;
an RRS of the first terminal detected by the fourth SL relay node;
identification information of the fourth SL relay node; and
identification information of a fifth SL relay node which forwards the SL connection request information to the fourth SL relay node.

13. The method according to claim 11, wherein in a case that SL connection forwarding information sent by one fourth SL relay node is received and SL connection request information comprised in the SL connection forwarding information is the SL connection request information obtained by the fourth SL relay node from the first terminal, the target SL path is an SL path on which the fourth SL relay node is located.

14. The method according to claim 11, wherein in a case that SL connection forwarding information sent by a plurality of fourth SL relay nodes is received and SL connection request information comprised in the SL connection forwarding information is the SL connection request information obtained by the fourth SL relay nodes from the first terminal, the target SL path is an SL path on which a target SL relay node in the plurality of fourth SL relay nodes is located.

15. The method according to claim 11, wherein in a case that the SL connection request information comprised in the SL connection forwarding information is SL connection request information received by the fourth SL relay node from a fifth SL relay node, the target SL path is an SL path with a smallest quantity of SL relay nodes in a plurality of SL paths formed by different combinations of the fourth SL relay node and the fifth SL relay node.

16. The method according to claim 15, wherein in a case that there are a plurality of SL paths with a smallest quantity of SL relay nodes, the target SL path is an SL path containing a target SL relay node in the SL paths with the smallest quantity of SL relay nodes.

17. The method according to claim 14 or 16, wherein an RRS of the target SL relay node is higher than RRSs of other SL relay nodes in the plurality of fourth SL relay nodes except the target SL relay node; and/or
a distance between the target SL relay node and the second terminal is less than distances between the other SL relay nodes and the second terminal.

18. An SL relay node, the SL relay node being a first SL relay node, and comprising:
a first obtaining module, configured to obtain SL connection request information of a first terminal; and
a first processing module, configured to send SL connection forwarding information in a case that the first SL relay node meets a first preset condition, wherein the SL connection forwarding information comprises the SL connection request information.

19. The SL relay node according to claim 18, wherein the first obtaining module comprises:
a first obtaining unit, configured to obtain the SL connection request information sent by the first terminal; or
a second obtaining unit, configured to obtain the SL connection request information sent by the first terminal that is forwarded by a second SL relay node.

20. The SL relay node according to claim 18 or 19, wherein the SL connection request information comprises at least one of following information:
location information of the first terminal;
identification information of the first terminal;
service-related information of the first terminal;
identification information of a second terminal to which the first terminal requests the SL connection; and
first indication information indicating that the SL connection request information needs to be forwarded.

21. The SL relay node according to claim 18, wherein the first preset condition comprises at least one of following:
a forwarding function of a service request of the first terminal is met;
a distance between the first SL relay node and the first terminal is within a first preset range;
a distance between the first SL relay node and a second SL relay node that previously forwards the SL connection request information sent by the first terminal is within a second preset range;
a distance between the first SL relay node and a second terminal to which the first terminal requests the SL connection is within a third preset range;
a received signal strength RSS of the first terminal is greater than or equal to a first preset value; and
an RRS of a second SL relay node that previously forwards the SL connection request information sent by the first terminal is greater than or equal to a second preset value.

22. The SL relay node according to claim 19, wherein in the first obtaining unit, the SL connection forwarding information further comprises at least one of following information:
location information of the first SL relay node; and
an RRS of the first terminal detected by the first SL relay node.

23. The SL relay node according to claim 19, wherein in the second obtaining unit, the SL connection forwarding information further comprises at least one of following information:
identification information of the first SL relay node; and
identification information of the second SL relay node.

24. An SL relay node, the SL relay node being a first SL relay node, and comprising: a memory, a processor, and a computer program stored in the memory and executable on the processor, wherein when the computer program is executed by the processor, the steps of the method for determining a sidelink SL relay node according to any one of claims 1 to 8 are implemented.

25. A terminal, the terminal being a second terminal, and comprising:
a first receiving module, configured to receive SL connection forwarding information sent by a fourth SL relay node, wherein the SL connection forwarding information comprises SL connection request information of a first terminal.

26. The terminal according to claim 25, further comprising:
a first determining module, configured to determine a target SL path according to the SL connection forwarding information; and
a second sending module, configured to send first response information through the target SL path.

27. The terminal according to claim 26, wherein in a case that SL connection forwarding information sent by a plurality of fourth SL relay nodes is received and SL connection request information comprised in the SL connection forwarding information is the SL connection request information obtained by the fourth SL relay nodes from the first terminal, the target SL path is an SL path on which a target SL relay node in the plurality of fourth SL relay nodes is located.

28. The terminal according to claim 26, wherein in a case that the SL connection request information comprised in the SL connection forwarding information is SL connection request information received by the fourth SL relay node from a fifth SL relay node, the target SL path is an SL path with a smallest quantity of SL relay nodes in a plurality of SL paths formed by different combinations of the fourth SL relay node and the fifth SL relay node.

29. The terminal according to claim 28, wherein in a case that there are a plurality of SL paths with a smallest quantity of SL relay nodes, the target SL path is an SL path containing a target SL relay node in the SL paths with the smallest quantity of SL relay nodes.

30. The terminal according to claim 27 or 29, wherein an RRS of the target SL relay node is higher than RRSs of other SL relay nodes in the plurality of fourth SL relay nodes except the target SL relay node; and/or
a distance between the target SL relay node and the second terminal is less than distances between the other SL relay nodes and the second terminal.

31. A terminal, the terminal being a second terminal, and comprising: a memory, a processor, and a computer program stored in the memory and executable on the processor, wherein when the computer program is executed by the processor, the steps of the method for determining a sidelink SL relay node according to any one of claims 9 to 17 are implemented.

32. A computer-readable storage medium, storing a computer program, wherein when the computer program is executed by a processor, the steps of the method for determining a sidelink SL relay node according to any one of claims 1 to 17 are implemented.

33. A chip, comprising a processor and a communication interface, wherein the communication interface is coupled to the processor, and the processor is configured to run a program or instruction, to implement the steps of the method for determining a sidelink SL relay node according to any one of claims 1 to 17.

34. A computer program product, stored in a readable storage medium, wherein when the computer program product is executed by at least one processor, the steps of the method for determining a sidelink SL relay node according to any one of claims 1 to 17 are implemented.

35. A communication device, configured to perform the steps of the method for determining a sidelink SL relay node according to any one of claims 1 to 17.
